Europäisches Patentamt

European Patent Office

Office européen des brevets

(19)

(11) Veröffentlichungsnummer: **0 110 121**
**A1**

(12) # EUROPÄISCHE PATENTANMELDUNG

(21) Anmeldenummer: 83110632.3

(22) Anmeldetag: 25.10.83

(51) Int. Cl.³: **H 05 B 3/26**, B 60 R 1/06

(30) Priorität: 30.11.82 DE 8233516 U

(43) Veröffentlichungstag der Anmeldung: 13.06.84
Patentblatt 84/24

(84) Benannte Vertragsstaaten: DE FR GB IT SE

(71) Anmelder: **FLABEG GMBH, Siemensstrasse 3,
D-8510 Fürth (DE)**

(72) Erfinder: **Seitz, Rudolf, Dipl.-Ing., Kopernikusstrasse 30,
D-8500 Nürnberhg 40 (DE)**

(74) Vertreter: **Tergau, Enno et al,
Hefnersplatz 3 Postfach 11 93 47,
D-8500 Nürnberg 11 (DE)**

(54) **Elektrischer Heizbelag für Spiegel.**

(57) Es wird ein mehrteiliger Heizbelag für Spiegel vorgeschlagen, der insbesondere zum Beheizen von Außenspiegeln für Kraftfahrzeuge dient. Der Heizbelag (1) besteht aus wenigstens drei parallel mit Abstand voneinander angeordneten Metallstreifen (2; 2'; 2''). Mit wenigstens einem dieser Streifen ist ein Heizelement (4) mit seiner ersten Hauptfläche strom- und wärmeleitend verbunden. Die jeweils diesem Streifen benachbarten Streifen sind über Metallbrücken (5; 5') ebenfalls mit dem ersten strom- und wärmeleitend verbunden, wobei die andere Hauptfläche des Heizelementes (4) mit den erwähnten Metallbrücken (5; 5') strom- und wärmeleitend in Verbindung stehen.

Der in mehrere Streifen aufgeteilte Wärmebelag hat den Vorteil, daß er sich bausatzartig vergrößern und so unterschiedlichen Spiegelgrößen und -formen anpassen läßt.

0110121

Flabeg GmbH, 8510 Fürth /Bayern

## Elektrischer Heizbelag für Spiegel

Die Erfindung betrifft einen mehrteiligen elektrischen Heizbelag für Spiegel, der aus mehreren dünnen Metallblechen sowie wenigstens einem plättchenförmigen elektrischen Heizelement besteht, wobei die beiden Hauptflächen des Heizelementes mit den Metallblechen strom- und wärmeleitend verbunden sind.

Derartige Heizbeläge sind beispielsweise aus der DE-PS 29 19 968 bekannt. Sie dienen insbesondere zum Beheizen von Außenspiegeln für Kraftfahrzeuge, können jedoch auch für andere Spiegel, beispielsweise Badezimmerspiegel, eingesetzt werden. Die Beläge haben den Zweck, die von den Heizelementen auf kleiner Fläche erzeugte Wärme über die Gesamtfläche des Spiegels zu verteilen und dadurch zu bewirken, daß der Spiegel zumindest weitgehend eis- und taufrei bleibt. Insbesondere bei Kraftfahrzeug-Außenspiegeln ist es dabei erwünscht, daß die Spiegelmitte an erster Stelle beheizt wird, damit bei vereistem Spiegel bereits nach kurzer Heizzeit wenigstens ein Teil des Spiegels benutzbar ist. Die gewünschte Wärmeverteilung kann durch entsprechende Bemessung der Materialstärke sowie der Breite des Heizbelages erzielt werden.

Heizbeläge der erwähnten Art werden in der Regel aus dünnem Metallblech, beispielsweise Kupferblech oder Aluminiumfolie, hergestellt. Die Bleche oder Folien werden auf die Rückseite des Spiegels aufgeklebt. Als Heizelemente werden meist plättchenförmige Körper aus keramischen Massen eingesetzt, welche einen über der Temperatur positiven Verlauf des Widerstandes aufweisen (sogenannte PTC-Elemente). Die Metallbleche oder -folien dienen gleichzeitig der Stromzufuhr zu den Heizelementen, weshalb die Anordnung so getroffen sein muß, daß die Metallbleche oder -folien die beiden Hauptflächen des plättchenförmigen Heizelementes (also die beiden Flachseiten) überdecken und mit diesen strom- und wärmeleitend in Verbindung stehen.

Beim deutschen Patent 29 19 968 sind die Bleche so geformt und angeordnet, daß sie sich streifenförmig überlappen, wobei zwischen den überlappenden Bereichen die Heizelemente angeordnet sind.

Die vorbekannten Heizbeläge für Spiegel haben den Nachteil, daß sie speziell für jede Spiegelgröße zugeschnitten sein müssen. Dies hat fabrikatorische Nachteile, wenn die Beläge bei der Spiegelherstellung gleich mit aufgebracht werden sollen. Es hat aber noch bedeutendere Nachteile für den Hersteller und Händler, schließlich aber auch für den Benutzer, wenn die Heizbeläge als Nachrüstteile in den Handel gebracht werden sollen, die vom Benutzer selbst auf die Rückseite des Spiegels aufgeklebt werden. In diesem Falle ist nämlich eine umfangreiche Lagerhaltung erforderlich, um alle in Betracht kommenden Spiegelgrößen erfassen zu können. Auch muß der Benutzer unter Umständen mehrere Größen erwerben, wenn er verschiedene Spiegel mit Heizbelag ausrüsten will.

Der Erfindung liegt die Aufgabe zugrunde, die vorbekannten mehrteiligen elektrischen Heizbeläge für Spiegel derart weiterzuentwickeln und zu verbessern, daß mit wenigen vorbestimmten Bauelementen mehrere Spiegelformen - und -größen ausgerüstet werden können. Die Lösung dieser Aufgabe ergibt sich aus dem kennzeichnenden Teil des Anspruches 1. Anspruch 2 beschreibt eine vorteilhafte Ausgestaltung des vorgeschlagenen Heizbelages.

Wie der kennzeichnende Teil des Anspruches 1 ausweist, besteht die Erfindung aus mehreren Merkmalen, die gemeinsam angewandt werden müssen. Es sind dies die Merkmale,

- daß der Heizbelag aus wenigstens drei parallel mit Abstand voneinander angeordneten Metallstreifen besteht,
- daß mit wenigstens einem dieser Streifen wenigstens ein Heizelement mit seiner ersten Hauptfläche strom- und wärmeleitend verbunden ist und
- daß die jeweils diesem Streifen benachbarten Streifen über eine Metallbrücke strom- und wärmeleitend verbunden sind, wobei
- die andere Hauptfläche des Heizelementes mit der erwähnten Metallbrücke strom- und wärmeleitend in Verbindung steht.

Durch die Aufteilung des Heizbelages in wenigstens drei parallel mit Abstand voneinander angeordnete Metallstreifen sowie in Brücken lassen sich unterschiedliche Spiegelbreiten und auch -formen leicht überdecken. Reichen drei Streifen nicht aus, so kann noch ein vierter oder fünfter oder auch noch mehrere hinzugenommen werden, wobei die erforderlichen Heizelemente entsprechend der gewünschten Wärmeverteilung angeordnet werden können. An Stelle der erwähnten Metallstreifen können naturgemäß auch Streifen aus anderen leitfähigen Werkstoffen, wie Metallgeweben, leitfähigen Kunststoffen u.dgl. verwendet werden.

Als vorteilhaft hat es sich erwiesen, wenn diejenigen Metallstreifen, die mit einer Hauptfläche eines oder mehrerer Heizelemente unmittelbar in Verbindung stehen, gleich breit wie der Durchmesser der jeweiligen Heizelemente sind. Die übrigen Metallstreifen können von dieser Breite abweichen, beispielsweise breiter sein. Da auch die Brücken der zuletzt erwähnten Bedingung entsprechen, also mit einer der Hauptflächen der Heizelemente unmittelbar in Verbindung stehen, wird vorgeschlagen, daß auch die Breite der Brücken etwa dem Durchmesser des jeweiligen Heizelementes entspricht.

Die Erfindung wird im folgenden an Hand der beigefügten Zeichnungen näher erläutert.

Es stellen dar:
Fig. 1   eine Draufsicht auf die Rückseite eines Spiegels mit dreistreifigem Heizelement,
Fig. 2   einen Schnitt nach der Linie II-II der Fig. 1,
Fig. 3   eine Draufsicht auf die Rückseite eines anderen Spiegels mit vierstreifigem Heizelement.

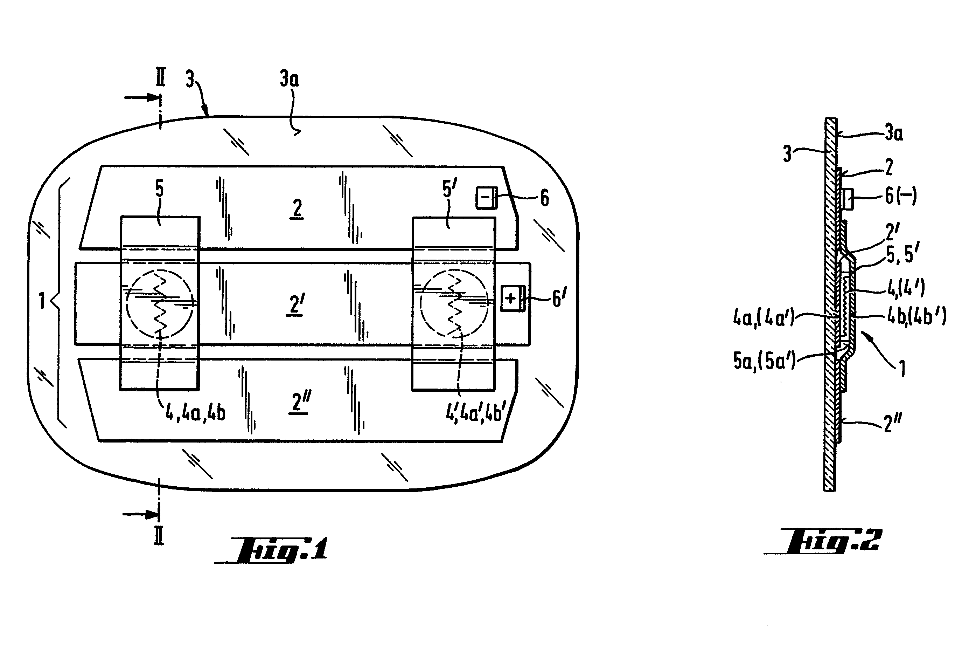

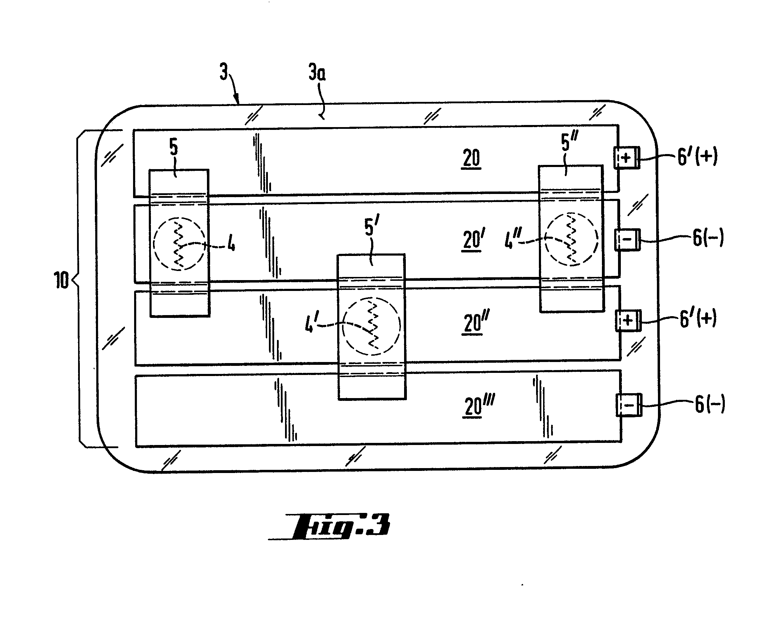

Die gesamte Heizbelageinrichtung nach der Erfindung, von welcher eine erste Ausführungsform in Fig. 1 und Fig. 2 und eine zweite in Fig. 3 gezeigt ist, ist durch die Bezugsziffern 1 bzw. 10 bezeichnet.

In der ersten Ausführungsform nach Fig. 1 und Fig. 2 besteht diese Heiz-Einrichtung aus drei Metallstreifen 2,2' und 2", welche im Abstand voneinander auf der Rückseite 3a des Spiegels 3 angeordnet sind. Die Einrichtung 1 umfaßt ferner zwei scheibenförmige, elektrische Heizelemente 4,4', deren zwei Hauptflächen (große, flache Flächen) 4a und 4b mit unterschiedlichen Metallstreifen elektrisch und wärmeleitfähig verbunden sind. So ist jedes Heizelement 4,4' über seine Hauptflächen 4a und 4a', welche der Rückseite 3a

0110121

des Spiegels 3 zugekehrt sind, mit dem mittleren Streifen 2' elektrisch und wärmeleitfähig verbunden.

Die Streifen 2 und 2", die dem mittleren Streifen 2' benachbart sind, sind miteinander mittels Metallbrücken 5 und 5' elektrisch und wärmeleitfähig verbunden, und die Hauptflächen 4b und 4b', welche von der Rückseite 3a des Spiegels 3 abgewandt sind, sind mit den Unterseiten 5a und 5a' der Metallbrücken 5 bzw. 5' elektrisch und wärmeleitfähig verbunden.

In der Einrichtung nach der Erfindung dienen also, wie in Figuren 1 und 2 gezeigt ist, die Metallstreifen 2,2' und 2" nicht nur zur Wärmeverteilung, sondern auch als Zuleitungen für elektrischen Strom.

Hierzu können auf den Metallstreifen Anschlußkontakte 6 und 6' vorgesehen sein, wobei die Anschlüsse 6 z.B. mit dem Minus-Pol einer Autobatterie und die Anschlüsse 6' mit dem Plus-Pol der gleichen Stromquelle verbunden sind. Wie in Fig. 1 gezeigt, können die Heizelemente 4 und 4' also parallel verbunden sein, und elektrischer Strom fließt dann durch sie zu gleicher Zeit und in derselben Richtung.

In der zweiten Ausführungsform nach Fig. 3 umfaßt die Heiz-Einrichtung 10 vier Metallstreifen 20,20',20" und 20'" und drei Heizelemente 4,4' und 4" sowie drei Brücken 5,5' und 5". In dieser Ausführungsform verbinden die Brücken 5 und 5" die Metallstreifen 20 und 20" und sind auf ihren Unterseiten mit den Heizelementen 4 und 4" in Kontakt, während die letzteren mittels ihrer, dem Streifen 20' zugewandten Hauptflächen in Kontakt stehen.

Die Brücke 5' andererseits verbindet die Metallstreifen 20' und 20'" miteinander, während elektrischer Strom vom Anschluß 6 des Streifens 20'", welcher mit dem Minus-Pol einer Autobatterie verbunden ist, durch den Heizdraht des Heizelementes 4' in den Streifen 20" und über den Anschluß 6' des letzteren wieder zurück zum Plus-Pol der Batterie fließt.

Flabeg GmbH, 8510 Fürth /Bayern

Ansprüche

1. Mehrteiliger elektrischer Heizbelag für Spiegel, bestehend aus mehreren dünnen Metallblechen sowie wenigstens einem plättchenförmigen elektrischen Heizelement, dessen beide Hauptflächen mit den Metallblechen strom- und wärmeleitend verbunden sind,

dadurch gekennzeichnet,

daß der Heizbelag (1) aus wenigstens drei parallel mit Abstand voneinander angeordneten Metallstreifen (2;2';2";2"') besteht,

daß mit wenigstens einem dieser Streifen wenigstens ein Heizelement (4) mit seiner ersten Hauptfläche strom- und wärmeleitend verbunden ist und

daß die jeweils diesem Streifen benachbarten Streifen über eine Metallbrücke (5;5';5") strom- und wärmeleitend verbunden sind, wobei die andere Hauptfläche des Heizelementes (4) mit der erwähnten Metallbrücke (5;5';5") strom- und wärmeleitend in Verbindung steht.

2. Heizbelag nach Anspruch 1,

dadurch gekennzeichnet,

daß diejenigen Metallstreifen, die mit einer Hauptfläche eines oder mehrerer Heizelemente unmittelbar in Verbindung stehen, gleich breit wie der Durchmesser des jeweiligen Heizelementes sind.

Bezugszeichenliste

1 Heizbelag

2 Metallstreifen

2' Metallstreifen

2" Metallstreifen

2"' Metallstreifen

3 Spiegel

3a Rückseite von 3

4 Heizelement

4' Heizelement

4" Heizelement

4a Oberflächen von 4

4b Oberflächen von 4

5 Metallbrücke

5' Metallbrücke

5" Metallbrücke

6 Anschlußösen

6' Anschlußösen

10 Heizbelag (Fig. 3)

20 Metallstreifen in Fig. 3

20' Metallstreifen in Fig. 3

20" Metallstreifen in Fig. 3

20"' Metallstreifen in Fig. 3

**Fig.1**

**Fig.2**

**Fig.3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | EP-A-0 073 521 (KABELWERKE REINSHAGEN) <br> * Seite 12, Zeile 11 - Seite 13, Zeile 10; Figuren 1,9 * <br><br> --- | 1 | H 05 B 3/26 <br> B 60 R 1/06 |
| A | US-A-4 237 366 (BERG) <br> * Spalte 2, Zeile 40 - Spalte 3, Zeile 32 * <br><br> --- | 1 | |
| A | DE-A-3 042 419 (EICHENAUER) <br><br> --- | | |
| A | GB-A-2 054 329 (NKF GROEP) <br><br> --- | | |
| A | US-A-3 720 807 (TING) <br><br> ----- | | **RECHERCHIERTE SACHGEBIETE (Int. Cl. 3)** <br><br> H 05 B <br> B 60 R <br> B 60 S |

Der vorliegende Recherchenbericht wurde für alle Patentansprüche erstellt.

| Recherchenort <br> DEN HAAG | Abschlußdatum der Recherche <br> 08-03-1984 | Prüfer <br> RAUSCH R.G. |
|---|---|---|